# EUROPÄISCHE PATENTSCHRIFT

(11) **EP 4 085 007 B1**
(45) Veröffentlichungstag und Bekanntmachung des Hinweises auf die Patenterteilung: **23.07.2025**
(21) Anmeldenummer: 20839338.9
(22) Anmeldetag: 28.12.2020
(51) Int. Cl.: B64F 5/60

(54) **VERFAHREN UND COMPUTERPROGRAMMPRODUKT ZUR ÜBERWACHUNG EINES ZAPFLUFTVERSORGUNGSSYSTEMS EINES FLUGZEUGS**
METHOD AND COMPUTER PROGRAM PRODUCT FOR MONITORING AN AIRCRAFT BLEED AIR SUPPLY SYSTEM
PROCÉDÉ ET PRODUIT PROGRAMME INFORMATIQUE PERMETTANT DE SURVEILLER UN SYSTÈME D'ALIMENTATION EN AIR DE PRÉLÈVEMENT D'UN AVION

(30) Priorität: 02.01.2020 EP 20150031
(43) Veröffentlichungstag der Anmeldung: 09.11.2022
(73) Patentinhaber: Lufthansa Technik AG, 22335 Hamburg (DE)
(72) Erfinder: DEMESCHKIN, Alexej, 55118 Mainz (DE)
(74) Vertreter: Glawe, Delfs, Moll
(86) Internationale Anmeldenummer: PCT/EP2020/087899
(87) Internationale Veröffentlichungsnummer: WO 2021/136750

(56) Entgegenhaltungen:
- FR-A1- 2 978 123
- US-A1- 2010 147 399
- US-B2- 9 555 903

## Beschreibung

Die Erfindung betrifft ein Verfahren und eine Anordnung zur Überwachung eines Zapfluftversorgungssystems eines Flugzeugs.

Bei Flugzeugen, insbesondere Verkehrsflugzeugen, wird aus dem Turboverdichter eines Triebwerks verdichtete Luft abgezapft, um einen gewünschten Druck in einer Druckkabine oder in pneumatischen Systemen des Flugzeuges erzeugen bzw. aufrecht erhalten zu können. Bei den Triebwerken kann es sich um Strahltriebwerke, Propellerturbinen oder Hilfsgasturbinen (APUs) handeln. Es ist üblich, dass jedes Triebwerk eines Flugzeuges mit einem separaten Zapfluftversorgungssystem auszustatten, u. a. auch um eine Redundanz zu gewährleisten.

Einem Triebwerk wird die Zapfluft durch ein Zapfluftversorgungssystem entnommen und den verschiedenen Verbrauchern zugeleitet. Dabei wird einem Triebwerk in der Regel neben stark verdichteter und somit heißer Zapfluft an andere Stelle auch wenig komprimierte und somit im Vergleich deutlich kühlere Luft entnommen, um die beim Verdichteten erhitzte Zapfluft in einem Wärmetauscher auf eine gewünschte Temperatur kühlen zu können.

Das Zapfluftversorgungssystem verfügt grundsätzlich über verschiedene Stellglieder, insbesondere steuerbare oder selbstregulierende Ventile, Druck- und Temperatursensoren oder Aufnehmer sowie ggf. einer Steuerungseinheit, die in Abhängigkeit der ermittelten Druck- und Temperaturwerte, sowie ggf. externer Steuerungssignale, die Stellglieder betätigen kann. Es ist auch möglich, auf eine Steuerungseinheit zu verzichten, wobei dann eine rein pneumatische Regelung der einzelnen Stellglieder realisiert werden kann. In beiden Fällen kann neben der Einhaltung eines gewünschten Betriebsdrucks grundsätzlich auch die Temperatur der den verschiedenen Verbrauchern zur Verfügung gestellten Druckluft geregelt werden.

Zapfluftversorgungssysteme weisen aufgrund der vielen mechanischen Komponenten, insbesondere bei rein pneumatischer Regelung, eine geringe Zuverlässigkeit auf. Bei Auftreten einer Störung ist das Zapfluftversorgungssystem aus Sicherheitsgründen grundsätzlich abzuschalten, auch wenn die häufigen Ausfälle teils erhebliche Störungen im Betrieb eines Flugzeugs, insbesondere eines Verkehrsflugzeugs, verursachen können.

Um Störungen eines Zapfluftversorgungssystems während eines Fluges erkennen zu können, lassen sich die von den Druck- und Temperatursensoren des Zapfluftversorgungssystems ermittelten Werte überwachen, wobei im Stand der Technik regelmäßig lediglich eine Prüfung gegenüber vorgegebenen Schwellwerten erfolgt. Wird bei einem solchen System ein Schwellwert durch einen Messwert überschritten, wird das gesamte Zapfluftversorgungssystem vorsorglich deaktiviert.

Auch wenn diese Überwachung des Zapfluftversorgungssystems in der Lage ist, mögliche Störungen im Zapfluftversorgungssystem zu erkennen und das System bei Bedarf zu deaktivieren, liefern die aus dem Stand der Technik bekannten Überwachungseinrichtungen in den Störungsmeldungen keine detaillierten Informationen zur möglichen Ursache einer Störung des Zapfluftversorgungssystems, sodass eine Störung regelmäßig aufwendige Fehlersuche- und Behebungsmaßnahmen erfordert.

Das Deaktivieren von Zapfluftversorgungssystem bei Störungen hat darüber hinaus den Nachteil, dass bei Deaktivierung eines Systems das oder die weiteren Zapfluftversorgungssysteme des Flugzeugs zusätzlich die Zapfluft des deaktivierten Zapfluftversorgungssystems bereitstellen müssen, was den Verschleiß und auch das Ausfallrisiko der weiteren Zapfluftversorgungssysteme erhöht.

Aus dem Dokument US 9,555,903 B2 ist ein Verfahren zum Diagnostizieren von Störungen des Zapfluftversorgungssystems beschrieben, bei dem diverse am Zapfluftversorgungssystem angeordnete Sensoren ausgelesen und die jeweiligen Sensordaten auf Abweichungen von Vergleichswerten überprüft werden. Bei den Vergleichswerten kann es sich um fest vorgegebene Werte, aus Betriebsparametern des Triebwerks und des dazugehörigen Zapfluftversorgungssystems ermittelte Parameter, für das fragliche Zapfluftversorgungssystem in der Vergangenheit ermittelte (Durchschnitts-)Werte oder für sämtliche Zapfluftversorgungssysteme einer Baureihe in der Vergangenheit ermittelte Durchschnittswerte handeln.

Die Interpretation evtl. festgestellter Abweichungen kann dabei flugphasenspezifisch erfolgen, also bspw. separat für die Start-, Steigflug-, Sinkflug- und Reiseflugphase. Es können dann in Einzelfällen bestimmte Abweichungen der Sensorwerte von den Vergleichswerten in vorgegebenen Flugphasen ggf. spezifischen Störungen des Zapfluftversorgungssystems zugeordnet werden. Hingegen kann bspw. ein zu geringer Druck in der Steigflug- oder Reiseflugphase tatsächlich keiner Komponente oder zumindest einer kleinen Gruppe von Komponenten eindeutig zugeordnet werden. Zumindest bei einem Teil der Störungsmeldungen erfolgt auch bei dem Verfahren gemäß US 9,555,903 B2 keine tatsächliche Einschränkung der ggf. fehlerhaften Komponenten des Zapfluftversorgungssystems, womit die Fehlersuche in einem solchen Störungsfall sehr aufwendig ist.

Das Dokument FR 2 978 123 A1 betrifft ein System zur Überwachung des Überschreitens eines vorbestimmten Temperaturschwellenwertes bei einer Zapfluftversorgung eines Flugzeugs. Es umfasst zwei Temperatursensoren und zwei redundant ausgeführte Module, die jeweils eine Temperaturüberwachung auf Basis der von den Temperatursensoren bereitgestellten Daten durchführen. Aufgabe der vorliegenden Erfindung ist es, ein Verfahren und eine Anordnung zur Überwachung eines Zapfluftversorgungssystems eines Flugzeugs zu schaffen, welches gegenüber dem Stand der Technik verbessert ist, bspw. indem eine genauere Fehlerdiagnose im Hinblick auf den Zeitpunkt, an dem ein Fehler auftritt, und/oder die Identifikation, an welcher Komponenten ein Fehler auftritt, möglich wird.

Gelöst wird diese Aufgabe durch ein Verfahren gemäß dem Hauptanspruch sowie einer Anordnung gemäß dem Anspruch 12. Vorteilhafte Weiterbildungen sind Gegenstand der abhängigen Ansprüche.

Demnach betrifft die Erfindung ein Verfahren zur Überwachung eines Zapfluftversorgungssystems eines Flugzeuges mit einem Sensor oder mehreren zur Zustandsüberwachung des Zapfluftversorgungssystems anhand der Sensordaten, wenigstens einem Betriebszustandsmonitor zur Erfassung des Betriebszustands des Flugzeuges ausgenommen dem Zapfluftversorgungssystem über wenigstens einen Betriebszustandswert, und wenigstens zwei unabhängigen Überwachungsmodulen zur Auswertung des Zustands wenigstens eines Teils des Zapfluftversorgungssystems anhand einer Überwachungsfunktion, wobei für jedes Überwachungsmodul eine individuelle Überwachungsfunktion, sowie individuelle Aktivierungs- und Deaktivierungsparameter basierend auf Sensordaten wenigstens eines Sensors der einen oder mehreren Sensoren und wenigstens einem Betriebszustandswert vorgesehen sind, mit den Schritten:
- Erfassen des Zustands des Zapfluftversorgungssystems über die Sensordaten und des Betriebszustands des Flugzeuges über den wenigstens einen Betriebszustandswert;
- Aktivieren eines Überwachungsmoduls der wenigstens zwei unabhängigen Überwachungsmodule, dessen Aktivierungsparameter durch die Sensordaten und den wenigstens einen Betriebszustandswert erfüllt sind;
- Überwachen des Zustands wenigstens eines Teils des Zapfluftversorgungssystems durch das aktivierte Überwachungsmodul anhand dessen Überwachungsfunktion; und
- Deaktivieren des aktivierten Überwachungsmoduls, dessen Deaktivierungsparameter durch die Sensordaten und wenigsten einen Betriebszustandswert erfüllt sind.

Weiterhin betrifft die Erfindung eine Anordnung, umfassend wenigstens zwei unabhängige Überwachungsmodule zur Auswertung eines Zustands wenigstens eines Teils eines Zapfluftversorgungssystems, wobei für jedes Überwachungsmodul eine individuelle Überwachungsfunktion, sowie individuelle Aktivierungs- und Deaktivierungsparameter basierend auf Sensordaten wenigstens eines Sensors zur Zustandsüberwachung des Zapfluftversorgungssystems anhand der Sensordaten und wenigstens einem Betriebszustandswert vorgesehen sind, und wobei jedes der Überwachungsmodule ein Computerprogrammprodukt oder einen Satz von Computerprogrammprodukten umfasst, mit Programmteilen, welche, wenn geladen in einen Computer oder in untereinander vernetzte Computer des jeweiligen Überwachungsmoduls, zur Durchführung des erfindungsgemäßen Verfahrens ausgelegt sind.

Das erfindungsgemäße Verfahren basiert zum einen auf den Sensordaten, die von dem wenigstens einen Sensor bereitgestellt werden und zur Zustandsüberwachung des Zapfluftversorgungssystems zumindest in dem Bereich des jeweiligen Sensors geeignet sind. In der Regel ist eine Vielzahl an Sensoren, wie bspw. Drucksensoren und Temperatursensoren über das Zapfluftsystem verteilt vorgesehen, um die jeweiligen Größen an unterschiedlichen Punkten des Systems zu erfassen. Es ist auch möglich, Aufnehmer vorzusehen, mit denen die momentanen Stellungen von Stellgliedern des Zapfluftversorgungssystems erfasst werden können.

Zum anderen wird wenigstens ein Betriebszustandswert berücksichtigt, welcher Informationen über den Betriebszustand des Flugzeuges, nicht aber des Zapfluftversorgungssystems liefert.

Bei dem Betriebszustandswert handelt es sich um eine technische Größe, die den Zustand einer technischen Einrichtung des Flugzeugs, wie bspw. die Fahrwerksposition oder die Schubhebelposition, Betriebswerte technische Einrichtungen, wie bspw. ein Druck innerhalb des Triebwerks, oder Zustandswerte des Flugzeugs oder der Umgebung, wie bspw. Innendruck in der Flugzeugkabine oder Außentemperatur, wiedergibt. Der wenigstens eine Betriebszustandswert, in der Regel aber eine Mehrzahl von Betriebszustandswerten werden von einem Betriebszustandsmonitor bereitgestellt, bei dem es sich bspw. auch den Bordcomputer oder das elektronische Überwachungssystem des Flugzeugs handeln kann.

Selbstverständlich ist es möglich, dass Betriebszustandswerte und die Sensordaten zur Zustandsüberwachung des Zapfluftversorgungssystems von einem einzigen System des Flugzeuges erfasst und/oder ermittelt werden und als einheitlicher Satz an Eingangsgröße dem erfindungsgemäßen Verfahren zur Verfügung gestellt wird. Auch in diesem Fall lassen sich die Eingangsgrößen aber logisch in Sensordaten zur Zustandsüberwachung des Zapfluftversorgungssystems und Betriebszustandswerte des Flugzeuges mit Ausnahme des Zapfluftversorgungssystems unterteilen.

Das erfindungsgemäße Verfahren zeichnet sich dadurch aus, dass wenigstens zwei unabhängige Überwachungsmodule zur Auswertung des Zustands wenigstens eines Teils des Zapfluftversorgungssystems vorgesehen sind, wobei für jedes Überwachungsmodul eine individuelle Überwachungsfunktion sowie individuelle Aktivierungs- und Deaktivierungsparameter basierend auf Sensordaten wenigstens eines Sensors und wenigstens einem Betriebszustandswert vorgesehen sind. Die Überwachungsmodule lassen sich also vollkommen unabhängig voneinander aktivieren und deaktivieren, um ebenfalls unabhängig voneinander den Zustand des Zapfluftversorgungssystems oder eines Teils davon zu überwachen. Letzteres wird insbesondere durch die individuellen Überwachungsfunktionen sichergestellt, die - im Gegensatz zu einer homogenen Redundanz - jedenfalls nicht identisch sind.

Wenn aktiviert, kann ein Überwachungsmodul mithilfe seiner Überwachungsfunktion anhand sämtlicher Sensordaten oder zumindest derjenigen Sensordaten betreffend denjenigen Teil des Zapfluftversorgungssystems, für dessen Überwachung das Modul bzw. dessen Überwachungsfunktion ausgebildet ist, den Zustand des gesamten Zapfluftversorgungssystems oder aber eben nur eines Teils davon überwachen.

Die Erfindung hat nämlich erkannt, dass es sich bei einem Zapfluftversorgungssystem einerseits um ein derart komplexes System handelt, dessen gesamtheitliche Überwachung häufig schwierig ist, sich das Zapfluftversorgungssystem andererseits aber regelmäßig in Subsysteme untergliedern lässt, deren jeweiligen Zustände - und daraus resultierend einzelne Funktionen der Subsysteme - sich unabhängig voneinander gut überwachen lassen. So lassen sich typische Zapfluftversorgungssysteme in der Regel in Subsysteme bzw. Teile wie Druckregelventil ("pressure regulator valve", PRV), Hochdruckventil ("high pressure valve", HPV), Temperaturregelungssystem ggf. inkl. einem Zuluftventil unterteilen. Die Ventilsubsysteme lassen sich dabei bspw. regelmäßig durch geeignet angeordnete Drucksensoren und Ventilstellungsaufnehmer überwachen, während für das Kühlsystem Temperatursensoren und ggf. ein Ventilstellungsaufnehmer für ein Zuluftventil vorgesehen sein können.

Es kann daher vorteilhaft sein, wenn ein vorgesehenes Überwachungsmodul zur Auswertung des Zustands eines Teils des Zapfluftversorgungssystems ausgebildet ist, dessen Zustand durch ein weiteres vorgesehenes Überwachungsmodul nicht ausgewertet wird. Dadurch lässt sich die Überwachungsfunktion des erstgenannten Überwachungsmoduls insbesondere auf eben jenen Teil des Zapfluftversorgungssystems zuschneiden, der von dem anderen Überwachungsmodul nicht auch überwacht wird. Es ist so möglich, eine Anzahl an auf bestimmte Teile des Zapfluftversorgungssystems zugeschnittene Überwachungsmodule vorzusehen, die grundsätzlich parallel zueinander betrieben werden können, um so eine Überwachung des gesamten Zapfluftversorgungssystems zu gewährleisten. Die von den einzelnen Überwachungsmodulen überwachten Teile können sich dabei auch teilweise überschneiden.

Da die einzelnen Überwachungsmodule nicht das Zapfluftversorgungssystem in seiner gesamten Komplexität, sondern jeweils nur Teile davon überwachen, ist auch die Komplexität der jeweiligen Überwachungsfunktion regelmäßig entsprechend niedriger. Das hat wiederum positive Auswirkungen auf die Zuverlässigkeit der Überwachung des Zapfluftversorgungssystems als Ganzes und ermöglicht insbesondere eine genaue Zuordnung evtl. Störungen zu fehlerhaften Subsystemen oder sogar zu verschlissenen oder fehlerhaften Systemkomponenten. Wird nämlich allein durch ein nur einen Teil des Zapfluftversorgungssystems überwachendes Überwachungsmodul eine Störung festgestellt, ist regelmäßig davon auszugehen, dass die Störung in dem entsprechend überwachten Teil des Zapfluftversorgungssystems aufgetreten ist, was die anschließende Fehlerbehebung erleichtert.

Das Vorsehen wenigstens zweier Überwachungsmodule (in der Regel deutlich mehr), die jeweils individuellen anhand geeigneter Vorgaben betreffend nicht nur der Sensordaten, sondern auch der Betriebszustandswerte aktiviert und deaktiviert werden können, bietet weitere Vorteile.

Indem bei der Aktivierung und Deaktivierung der Überwachungsmodule neben den Sensordaten auch die Betriebszustandswerte des Flugzeuges berücksichtigt werden, wird sichergestellt, dass ein Überwachungsmodul nur dann aktiviert wird, wenn dessen Überwachungsfunktion für den tatsächlichen Betriebszustand des Flugzeugs bzw. dem aus den Sensordaten ablesbaren Zustand des Zapfluftversorgungssystems geeignet ausgebildet ist. Dabei lassen sich die Aktivierung und Deaktivierung jedes Überwachungsmoduls gesondert festlegen, sodass sich bspw. zur Überwachung für einen bestimmten Teil des Zapfluftversorgungssystems mehrere Überwachungsmodule vorgesehen sind, die jedoch aufgrund abweichender Aktivierungs- und Deaktivierungsparameter in unterschiedlichen Betriebszuständen aktiviert sind. Dabei ist zu beachten, dass aufgrund der Kombination von Sensordaten wenigstens eines Sensors und wenigstens einem Betriebszustandswert eine zustandsabhängige Aktivierung der einzelnen Überwachungsmodule möglich ist, deren Detailgrad bereits im Ansatz über die aus dem Stand der Technik bekannte Einteilung in Flugphasen hinausgeht. Dies gilt selbstverständlich umso mehr, je mehr Sensoren und/oder Betriebszustandswerte bei der Aktivierung und/oder Deaktivierung berücksichtigt werden.

Es ist selbstverständlich möglich und in der Regel auch wünschenswert, die beiden beschriebenen vorteilhaften Nutzen des Vorsehens mehrerer Überwachungsmodule zu kombinieren. In der Folge ist es bevorzugt, wenigstens drei Überwachungsmodule vorgesehen sind, von denen eines der Überwachungsmodule zur Auswertung des Zustands eines Teils des Zapfluftversorgungssystems ausgebildet ist, dessen Zustand durch ein anderes Überwachungsmodul nicht ausgewertet wird und von denen zwei Überwachungsmodule zur Zustandsüberwachung wenigstens teilweise überlappender Teile des Zapfluftversorgungssystems ausgebildet sind, aber abweichende Aktivierungs- und Deaktivierungsparameter aufweisen. Die Anzahl der Überwachungsmodule lässt sich dabei beliebig erweitern, um so jede gewünschte Überwachungsfunktion für das Zapfluftversorgungssystem oder beliebige Teile davon bei beliebigen Zuständen des Zapfluftversorgungssystems und/oder des Flugzeugs zu realisieren.

Erneut ist darauf hinzuweisen, dass durch die erfindungsgemäß mögliche Fokussierung eines Überwachungsmoduls bzw. dessen Überwachungsfunktion auf einen bestimmten Teil des Zapfluftversorgungssystems und/oder einen bestimmten Betriebszustand des Gesamtsystems Flugzeugs inkl. dem Zapfluftversorgungssystem eine Überwachungsfunktion überschaubarer Komplexität ermöglich, die in der Folge regelmäßig deutlich zuverlässiger ist, als eine einzelne komplexe Überwachungsfunktion für das gesamte Zapfluftversorgungssystems und sämtliche Betriebszustände, wie dies im Stand der Technik versucht wird.

Die Deaktivierungsparameter eines Überwachungsmoduls können grundsätzlich dessen Aktivierungsparametern entsprechen, womit das Überwachungsmodul bei Erreichen eines bestimmten, durch die Aktivierungsparameter definierten Zustand aktiviert und bei Verlassen eben dieses Zustands wieder deaktiviert wird. Dadurch kann sichergestellt werden, dass das Überwachungsmodul tatsächlich nur in dem Betriebsmodus von Flugzeug und Zapfluftversorgungssystem aktiv ist, für den dessen Überwachungsfunktion ausgebildet ist.

Es ist möglich, dass die Aktivierungsparameter eines Überwachungsmoduls einen Zeitverzögerungsparameter umfassen, um ein Überwachungsmodul erst nach einer vorgegebenen Zeit nach Erfüllung der Aktivierungsparameter zu aktivieren. In diesem Fall wird das Überwachungsmodul nach Erfüllung der auf den Sensordaten und dem wenigstens einen Betriebszustandswert basierenden Aktivierungsparameter nicht unmittelbar, sondern vielmehr erst nach Ablauf der durch den Zeitverzögerungsparameter vorgegebenen Zeit aktiviert. Durch diese Zeitverzögerung in der Aktivierung können transiente Effekte bei einem Wechsel des Betriebsmodus von Flugzeug und/oder Zapfluftversorgungssystem, die grundsätzlich die Aktivierung eines Überwachungsmoduls zur Folge hat, von der Überwachung durch eben dieses Überwachungsmodul ausgenommen werden, um bspw. eine falschpositive Störungsmeldung zu vermeiden. Indem transiente Effekte von der Überwachung durch ein Überwachungsmodul ausgenommen werden können, muss die Überwachungsfunktion eines solchen Überwachungsmoduls nicht auf die Berücksichtigung von transienten Effekten ausgerichtet sein, womit häufig eine geringe Komplexität der Überwachungsfunktion möglich ist.

Es ist auch möglich, dass die Deaktivierungsparameter eines Überwachungsmoduls einen Zeitdauerparameter umfassen, um ein Überwachungsmodul nach Ablauf einer vorgegebenen Zeitdauer nach dessen Aktivierung zu deaktivieren. Die Deaktivierung kann dabei unabhängig von einer Deaktivierung auf Basis von Sensordaten und dem wenigstens einen Betriebszustandswert erfolgen. Durch die Deaktivierung eines Überwachungsmoduls über einen Zeitdauerparameter kann ein Überwachungsmodul für die zeitlich begrenzte Überwachung vorgegebener Änderungen des Betriebsmodus von Flugzeug und/oder Zapfluftversorgungssystem vorgesehen werden, wobei sich das Ende der transienten Veränderung der Sensordaten und/oder des wenigstens einen Betriebszustandswert nicht aus den Sensordaten bzw. dem wenigstens einen Betriebszustandswert selbst ablesen lassen.

Es ist bevorzugt, wenn ein Überwachungsmodul bzw. dessen Überwachungsfunktion zum Vergleich der erfassten Sensordaten mit historischen, bei vorangegangenen Aktivierungen des Überwachungsmoduls aufgezeichneten Sensordaten ausgebildet ist.

Durch den Vergleich mit entsprechenden historischen Daten lassen sich Veränderungen des überwachten Teils des Zapfluftversorgungssystems ermitteln, die auf mögliche Störungen im überwachten Teil des Zapfluftversorgungssystems hinweisen können. Aufgrund der Aktivierungs- und Deaktivierungsparameter des Überwachungsmoduls ist dabei sichergestellt, dass der Vergleich der Sensordaten nur mit historischen Sensordaten erfolgt, die in dem Zustand von Flugzeug und Zapfluftversorgungssystem aufgezeichnet wurden, für welchen das Überwachungsmodul ausgebildet ist.

Es ist bevorzugt, wenn ein Überwachungsmodul bzw. dessen Überwachungsfunktion zur Ermittlung von Minimal-, Maximal-, Durchschnitts- und/oder Varianzwerten der Sensordaten wenigstens eines Sensors oder sonstiger Aggregationswerte über einen Aktivierungszeitraum zwischen Aktivierung und anschließender Deaktivierung ausgebildet ist. Die entsprechenden Werte können bei nachfolgenden Überwachungen durch das Überwachungsmodul berücksichtigt werden, um evtl. auftretende Störungen zu identifizieren. So kann bspw. eine gegenüber historischen Werten stark erhöhte Varianz der Sensordaten auf eine (drohende) Fehlfunktion des von dem Überwachungsmodul überwachten Teils des Zapfluftversorgungssystems oder aber des gesamten Zapfluftversorgungssystems hinweisen.

Es ist bevorzugt, wenn wenigstens ein Überwachungsmodul zur Überwachung wenigstens eines Teils der Sensoren ausgebildet ist, nämlich um die Sensoren auf Funktionstüchtigkeit hin zu überwachen. Durch ein entsprechendes Überwachungsmodul können fehlerhaften Sensordaten erkannt werden, die ansonsten ggf. durch die anderen Überwachungsmodule als Hinweis auf eine Fehlfunktion der von diesen Überwachungsmodulen überwachten Teile des Zapfluftversorgungssystems interpretiert würden. Die Überwachungsmodule können unmittelbar an Bord des Flugzeugs angeordnet sein. Es ist aber bevorzugt, die Überwachungsmodule außerhalb des Flugzeugs anzuordnen, wobei die Sensordaten und der wenigstens eine Betriebszustandswert vom Flugzeug an die externen Überwachungsmodule übermittelt werden. Dabei kann eine kontinuierliche Übermittlung der fraglichen Daten zur Echtzeitüberwachung durch die Überwachungsmodule vorgesehen sein. Es ist aber auch möglich, wenn die fraglichen Daten an Bord des Flugzeugs aufgezeichnet und mit zeitlicher Verzögerung an die Überwachungsmodule übermittelt werden. Bspw. können nach jeder Landung die über den vorangegangenen Flug aufgezeichneten Daten an die Überwachungsmodule übermittelt werden. Die an Bord des Flugzeugs aufgezeichneten Daten können auch drahtgebunden im Rahmen einer Wartung ausgelesen oder in Form eines Wechselspeichermediums entnommen werden.

Unabhängig davon, ob die Überwachungsmodule an Bord des Flugzeuges oder außerhalb davon angeordnet sind, sind diejenigen für eine Echtzeitüberwachung vorgesehenen Überwachungsmodule vorzugsweise dazu ausgebildet, eine Warnung auszugeben, wenn die Überwachungsfunktion eines Überwachungsmoduls eine Störung erkennt. Auch können die entsprechenden Überwachungsmodule dazu ausgebildet sein, ein Zapfluftversorgungssystem bei einer als von der Überwachungsfunktion als schwerwiegend eingestuften Störung zu deaktivieren, sofern die Zapfluftversorgung durch ein anderes redundantes Zapfluftsystem sichergestellt bleibt.

Alternativ oder zusätzlich sind die Überwachungsmodule dazu ausgebildet prädikative Verfahren durchzuführen und ebenfalls bei Bedarf eine Warnung auszugehen. Bei prädikativen Verfahren werden Veränderungen der Sensordaten des von einem Überwachungsmodul überwachten Teils des Zapfluftversorgungssystems über die Zeit beobachtet, die ggf. selbst keine unmittelbare Störung anzeigen, aber darauf hinweisen können, dass eine Störung unmittelbar bevorsteht. Wird Entsprechendes festgestellt, kann eine Warnung ausgegeben werden. Der betroffene Teil des Zapfluftversorgungssystems kann dann vorsorglich gewartet werden, bevor eine tatsächliche Störung des Zapfluftversorgungssystems einhergehend mit einem Ausfall des Zapfluftversorgungssystems eintritt. Prädikativen Verfahren eignen sich insbesondere für die zeitlich verzögerte Auswertung aufgezeichneter Sensordaten.

Der wenigstens eine Betriebszustandswert kann bevorzugt Informationen zu den Betriebszuständen der Zapfluftverbraucher, wie bspw. der Klima- und Kabinendruckregelungsanlagen, umfassen. Auch die Stellung von Absperrventilen im pneumatischen System, bspw. um das pneumatische System in Einzelbereiche zu unterteilen, kann durch einen oder mehrere Betriebszustandswerte abgebildet werden. Alternativ oder zusätzlich kann der Betriebszustandswert Informationen zum Status des Fahrwerks, zum Ausgangsdruck des Hochdruckkompressors eines Triebwerks oder zur Umgebungstemperatur umfassen.

Ein bei der erfindungsgemäßen Aktivierung und Deaktivierung eines Überwachungsmoduls zur Überwachung eines bestimmten Zapfluftversorgungssystems einfließende Betriebszustandswert kann aber auch den Betriebszustand eines anderen Zapfluftversorgungssystems des Flugzeugs umfassen. So können bspw. in einem für das Zapfluftversorgungssystem eines Haupttriebwerks vorgesehenen Überwachungsmodul Informationen über den Betriebszustand des Zapfluftversorgungssystems einer Hilfsgasturbine (APU) oder eines anderen Triebwerks bei den Aktivierungs- und Deaktivierungsparametern berücksichtigt werden.

Zur Erläuterung der erfindungsgemäßen Anordnung wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: ein zur Durchführung des erfindungsgemäßen Verfahrens ausgebildetes Flugzeug;
- Figur 2:: eine Detaildarstellung des Zapfluftversorgungssystems des Flugzeugs aus Figur 1; und
- Figur 3:: eine schematische Darstellung des zur Durchführung des erfindungsgemäßen Verfahrens ausgebildeten Flugzeugs gemäß Figur 1.

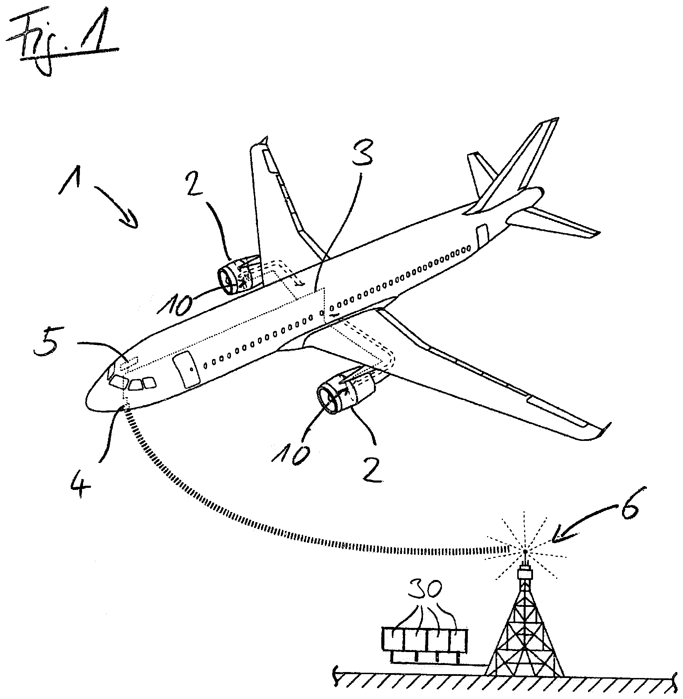

In Figur 1 ist schematisch ein Flugzeug 1 gezeigt, das zur erfindungsgemäßen Überwachung der Zapfluftversorgungssysteme 10 des Flugzeuges 1 ausgebildet ist.

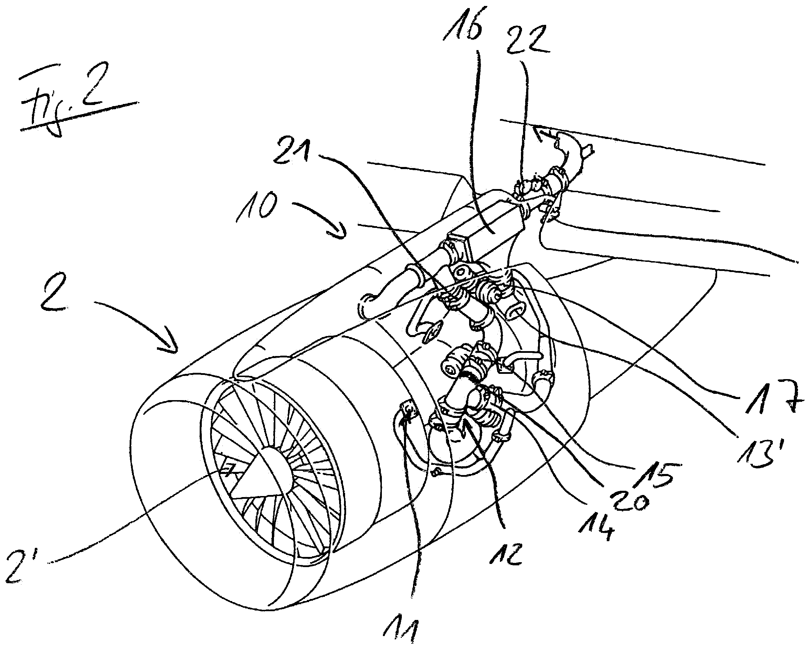

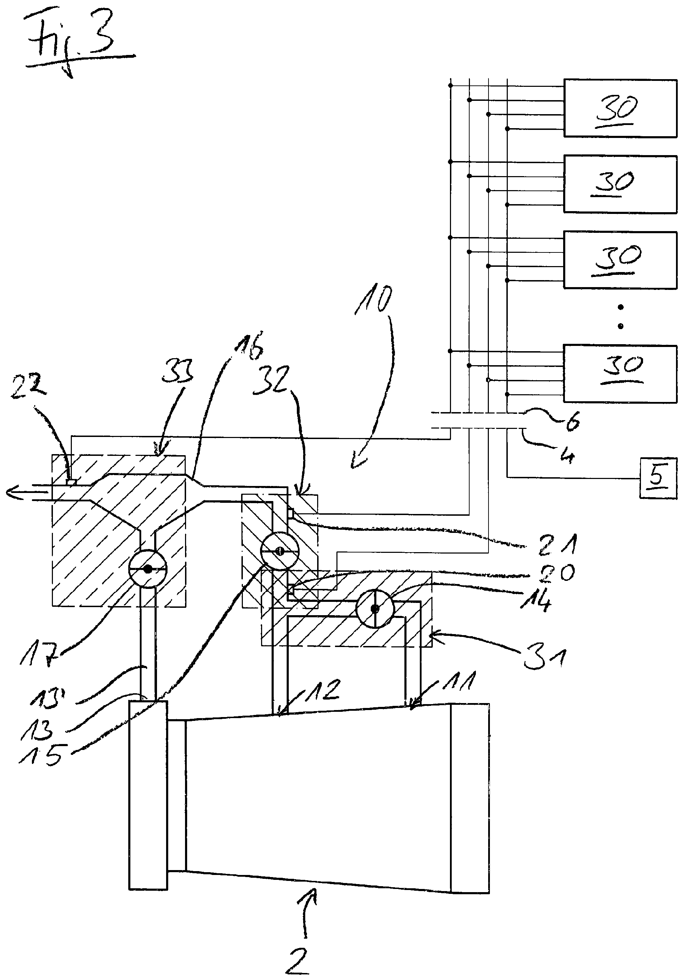

Das Flugzeug 1 verfügt über zwei Triebwerke 2, welche jeweils mit einem Zapfluftversorgungssystem 10 umfassend diverse Sensoren 20-22 ausgestattet sind. Die Zapfluftversorgungssysteme 10 und die Sensoren 20-22 werden nachfolgend anhand von Figuren 2 und 3 noch näher erläutert.

Die Sensoren 20-22 sind über einen flugzeuginternen Datenbus 3 mit einer Kommunikationseinheit 4 verbunden, mit dem die Sensordaten der Sensoren 20-22 an eine Bodenstation 6 übermittelt werden. Ebenfalls mit dem flugzeuginternen Datenbus 3 und somit mit der Kommunikationseinheit 4 verbunden ist der Betriebszustandsmonitor 5, der Betriebszustandswerte bereitstellt, die ebenfalls an die Bodenstation 6 übermittelt werden.

An der Bodenstation 6 sind eine Mehrzahl von Überwachungsmodulen 30 angeordnet, deren Funktionsweise nachfolgend in Zusammenhang mit Figur 3 näher erläutert wird. Über die Bodenstation 6 können auch Störungsmeldungen oder sonstige Informationen an den Bordcomputer als Betriebszustandsmonitor 5 des Flugzeugs 1 übermittelt werden, der diese Informationen entweder dem Piloten im Cockpit zur Anzeige bringt.

In Figur 2 ist das Zapfluftversorgungssystem 10 eines Triebwerks 2 strukturell näher dargestellt, während in Figur 3 eine schematische Funktionsskizze des Zapfluftversorgungssystems 10 umfasst.

Das Zapfluftversorgungssystem 10 verfügt über zwei Abzapfstellen 11, 12 im Bereich der Kompressorstufen des Triebwerks 2, wobei die eine Abzapfstelle 11 im Bereich des Ausgangs des Hochdruckkompressors des Triebwerks 2 angeordnet ist, während die andere Abzapfstelle 12 in einem Bereich des Triebwerks 2 mit geringeren Druck angeordnet ist. Außerdem ist noch eine Abzapfstelle 13 im Bereich des Triebwerksfans 2' angeordnet, über die dem in das Triebwerk 2 einströmende nicht oder nur kaum komprimierte Umgebungsluft entnommen werden kann. In Figur 2 ist die Abzapfstelle 13 aus Gründen der Übersichtlichkeit nicht dargestellt, sondern lediglich der Anschluss für die Zuleitung 13' zu eben dieser Abzapfstelle 13.

Der Abzapfstelle 11 im Bereich des Ausgangs des Hochdruckkompressors des Triebwerks 2 ist ein erstes Steuerventil 14, das Hochdruckventil, zugeordnet, dessen Ausgang mit der Abzapfstelle 12 verbunden ist. Die Ausgangsstelle 12 und der Ausgang des ersten Steuerventils 14 sind an ein weiteres Steuerventil 15, dem Druckregelventil, verbunden. Von dort aus gelangt die Zapfluft durch einen Wärmetauscher 16 zu den Verbrauchern bzw. in ein Druckluftversorgungsnetz (nicht dargestellt).

Der Wärmetauscher 16 kann zur Kühlung der aufgrund der Komprimierung erhitzten Zapfluft über die Zuleitung 13' mit kühlerer Umgebungsluft versorgt werden. Zur Regelung des Kühlluftstroms und somit der Kühlung ist das Steuerungsventil 17 in der Zuleitung 13' vorgesehen.

Bei den Steuerungsventilen 14, 15, 17 kann es sich um selbstregulierende Ventile oder um durch eine Steuerungseinheit (nicht dargestellt) aktiv gesteuerte Ventile handeln.

Das Zapfluftversorgungssystem 10 ist mit einer Reihe von Sensoren 20-22 ausgestattet, an deren Messwerten der Zustand des Zapfluftversorgungssystems 10 abgelesen werden kann. So sind in Strömungsrichtung der Zapfluft gesehen unmittelbar vor und hinter dem Druckregelventil 15 Drucksensoren 20, 21 angeordnet, während hinter dem Wärmetauscher 16 ein Temperatursensor 22 vorgesehen ist.

Die von den Sensoren 20-22 erfassten Sensordaten werden über den Datenbus 3 an die Kommunikationseinheit 4 und von dort aus - zusammen mit Betriebszustandswerten von dem Betriebszustandsmonitor 5 - drahtlos an die Bodenstation 6 übermittelt.

Bei der Bodenstation 6 ist eine Mehrzahl an voneinander unabhängigen Überwachungsmodulen 30 angeordnet, denen jeweils die empfangenen Sensordaten und Betriebszustandswerte zugeleitet werden. In Figur 3 sind exemplarisch vier Überwachungsmodule 30 dargestellt, obwohl eine beliebige Anzahl an Überwachungsmodulen 30 möglich ist.

Jedes der Überwachungsmodule 30 verfügt über Aktivierungs- und Deaktivierungsparameter, deren Erfüllung durch die empfangenen Sensordaten und Betriebszustandswerte entsprechend zur Aktivierung oder Deaktivierung des betroffenen Überwachungsmoduls 30 führen. Weiterhin umfasst jedes Überwachungsmodul 30 eine Überwachungsfunktion, mithilfe derer die empfangenen Sensordaten auf mögliche Fehlfunktionen oder Störungen des Zapfluftversorgungssystems 10 hin überwachen lassen. Tritt eine Störung auf, können die Überwachungsmodule 30 entsprechende Störungsmeldungen absetzen.

Ein Teil der Überwachungsmodule 30 kann auch zur Durchführung prädikativer Verfahren ausgebildet sein, bei denen Veränderungen der Sensordaten über die Zeit im Hinblick auf sich anbahnende Fehlfunktionen hin ausgewertet werden. Wird das Bevorstehen einer Fehlfunktion erkannt, erfolgt eine entsprechende Mitteilung, sodass das Zapfluftversorgungssystems 10 möglichst vor dem tatsächlichen Auftreten der Fehlfunktion gewartet werden kann.

Das Zapfluftversorgungssystem 10 ist logisch in verschiedene, sich teilweise überschneidende Teile 31-33 gegliedert, wobei die Überwachungsmodule 30 größtenteils nur zur Überwachung jeweils eines entsprechenden Teils des Zapfluftversorgungssystems 10 ausgebildet sind. Für die unterschiedlichen Teile des Zapfluftversorgungssystems 10 können aber durchaus mehrere Überwachungsmodule 30 vorgesehen sein, die aufgrund unterschiedlicher Aktivierungs- und Deaktivierungsparameter in unterschiedlichen Betriebszuständen des Zapfluftversorgungssystems 10 und/oder des Flugzeugs 1 aktiv sind. Auch hier ist selbstverständlich ein Überschneiden der Überwachung durch zwei unterschiedliche Überwachungsmodule 30 möglich.

Die letztendliche Überwachung durch die separaten und voneinander unabhängigen Überwachungsmodule wird nachfolgend an Beispielen möglicher Überwachungsmodule erläutert:
Die Druckregelung durch das Druckregelventil 15 durchläuft unterschiedliche Anforderungen während eines Fluges, die jeweils unterschiedliche Überwachungen erfordern.

Während der Beschleunigungsphase beim Start des Flugzeugs 1 werden in der Regel sämtliche Druckluftverbraucher abgeschaltet, sodass einem Triebwerk 2 in dieser Phase grundsätzlich keine Zapfluft durch das Zapfluftversorgungssystem 10 entnommen werden muss, um so maximale Leistung für die Schuberzeugung zur Verfügung zu stellen. In der Folge sollte der bei Deaktivierung der Druckluftverbraucher und des Zapfluftversorgungssystems 10 der in dem Druckluftversorgungsnetz herrschende Druck in diesem Betriebszustand konstant bleiben und in der Regel dem Solldruck des Druckluftversorgungsnetzes entsprechen.

Die Überwachungsfunktion eines Überwachungsmoduls 30 für eben diesen besonderen Betriebszustand des Flugzeuges 1 kann sich auf die Sensordaten des Drucksensors 21 hinter dem Druckregelventil 20 stützen, der grundsätzlich den im Druckluftversorgungsnetz herrschenden Druck abbildet. Ein Ansteigen des gemessenen Drucks über diesen Betriebszustand gesehen weist auf eine Fehlfunktion des Druckregelventils 20 hin. Alternativ zum Ermitteln des Druckverlaufs während des fraglichen Betriebszustands, können auch Durchschnitts- und Maximaldruckwerte für den Betriebszustand ermittelt und mit historischen Werten, die in der Vergangenheit in demselben Betriebszustand ermittelt wurde, oder die als feste Größen vorgegeben sind, verglichen werden. Eine zu große Abweichung weist auf eine Störung hin und führt zu einer entsprechenden Störungsmeldung. Ein über die Zeit gesehener Anstieg des Durchschnittdruckwerts kann für die prädikative Vorhersage einer möglichen Fehlfunktion herangezogen werden.

Zur Ermittlung des fraglichen Betriebszustands und somit zur Aktivierung des dazugehörigen Überwachungsmoduls wird auf diverse Sensordaten und Betriebszustandswerte zurückgegriffen. Zur Aktivierung des Überwachungsmoduls muss sich so der über den Drucksensor 21 erfasste Druck in einem zulässigen Bereich um den Solldruck des Druckluftversorgungsnetzes liegen, wozu auf die entsprechenden Sensordaten zurückgegriffen wird. Als Betriebsparameter werden die Informationen, dass sämtliche Druckluftverbraucher deaktiviert sind, das Zapfluftversorgungssystem 10 aktiviert ist und der Hochdruckkompressor-Ausgangsdruck des Triebwerks 2 über einem vorgegebenen Schwellwert liegt. Das kollektive Auftreten der genannten, rein technischen Betriebsparameter deutet auf die fragliche Startbeschleunigungsphase bzw. den entsprechenden Betriebszustand des Flugzeugs 1 hin.

Ist eine der vorgenannten Aktivierungsparameter nicht mehr erfüllt, wird das fragliche Überwachungsmodul 30 deaktiviert. Die Deaktivierungsparameter entsprechend also den Aktivierungsparametern.

Wie sich aus den vorstehenden Ausführungen ergibt, ist das beschriebene Überwachungsmodul 30 also zur Überwachung des für die Druckregelung vorgesehenen Teils des Zapfluftversorgungssystems 10 allein während der Startbeschleunigungsphase des Flugzeugs ausgebildet. Die Überwachungsfunktion des Überwachungsmoduls 30 ist dabei recht simpel und somit äußerst robust und zuverlässig. Eine Störungsmeldung eben dieses Überwachungsmoduls 30 weist auf ein Problem des Druckregelventils 15 hin.

Ein weiteres Überwachungsmodul 30, welches ebenfalls für die Überwachung des für die Druckregelung verantwortlichen Teils des Zapfluftversorgungssystems 10 ausgebildet ist, wird aktiviert, wenn die Betriebszustandswerte angeben, dass die Fahrwerke des Flugzeugs 1 nicht mehr komprimiert sind (also keinen Bodenkontakt mehr haben), wenigstens ein Teil der Druckluftverbraucher aktiviert ist und der Hochdruckkompressor-Ausgangsdruck des Triebwerks 2 über einem vorgegebenen Schwellwert liegt. Als Sensordaten werden die Daten des Sensors 21 berücksichtigt, die über einem vorgegebenen Schwellwert liegen müssen, wodurch angezeigt wird, dass das Zapfluftversorgungssystem 10 aktiv oder grundsätzlich mit dem Druckluftversorgungsnetz verbunden ist.

Die Aktivierungsparameter umfassen weiterhin einen Zeitverzögerungsparameter von 60 Sekunden. Da die Aktivierungsparameter den Aktivierungszustand der Druckluftverbraucher umfassen, kommt es nach Erfüllung der technischen Aktivierungsparameter aufgrund der regelmäßig plötzlichen Aktivierung der Verbraucher grundsätzlich zu transienten Druckschwankungen im Druckluftversorgungsnetz, die von dem Überwachungsmodul 30 nicht berücksichtigt werden sollen. Indem der Zeitverzögerungsparameter vorgesehen, übernimmt das Überwachungsmodul 30 erst dann tatsächlich die Überwachung, nachdem die fraglichen transienten Druckschwankungen abgeklungen sind.

Ist eine der vorgenannten Aktivierungsparameter nicht mehr erfüllt, wird das fragliche Überwachungsmodul 30 deaktiviert. Die Deaktivierungsparameter entsprechend also zunächst den Aktivierungsparametern. Zusätzlich ist als weiterer Deaktivierungsparameter noch ein Zeitdauerparameter vorgesehen, wonach das Überwachungsmodul 30 600 Sekunden nach dessen Aktivierung deaktiviert wird, auch wenn zu diesem Zeitpunkt noch sämtliche Aktivierungsparameter erfüllt sein sollten.

Die Überwachungsfunktion des Überwachungsmoduls 30 kann auf die Varianz der Sensordaten abstellen. Eine zu plötzliche Druckänderung und/oder ein deutliches Schwanken des Drucks weist auf eine Störung der Druckregelung des Zapfluftversorgungssystems 10 hin. Die Varianz kann auch im Zuge eines prädikativen Verfahrens ausgewertet werden, wobei ein Anstieg der Varianz auf eine drohende Fehlfunktion bspw. des Druckregelventils 15 hinweist.

Ein weiteres Überwachungsmodul 30 ist zur Überwachung desjenigen Teils des Zapfluftversorgungssystems 10 ausgebildet, welches die Hochdruckzapflufteinspeisung regelt, also insbesondere des Hochdruckventils 31. Das Überwachungsmodul 30 soll dabei ausschließlich in der Startbeschleunigungsphase bzw. dem entsprechenden Betriebszustand des Flugzeugs 1 aktiv sein, weshalb die Aktivierungs- und Deaktivierungsparameter dieses Überwachungsmoduls 30 mit denjenigen des Überwachungsmoduls 30 zur Überwachung des Druckregelventils 15 in eben dieser Startbeschleunigungsphase entsprechen: Der über den Drucksensor 20 erfasste Druck muss in einem zulässigen Bereich um den Solldruck des Druckluftversorgungsnetzes liegen, sämtliche Druckluftverbraucher müssen deaktiviert sein, das Zapfluftversorgungssystem 10 muss aktiviert sein und der Hochdruckkompressor-Ausgangsdruck des Triebwerks 2 muss über einem vorgegebenen Schwellwert liegen. Die Deaktivierung erfolgt mit entsprechenden Deaktivierungsparametern, also wenn einer der Aktivierungsparameter nicht mehr erfüllt ist.

Wird durch die Überwachungsfunktion festgestellt, dass der durch den Drucksensor 20 aufgenommene Druck oberhalb eines Schwellwertes liegt oder um mehr als eine vorgegebene Differenz von dem historischen Durchschnittswert dieses Drucksensors 20 in der fraglichen Betriebsphase nach oben hin abweicht, wird eine Störung gemeldet. In diesem Fall ist von einer Fehlfunktion des Hochdruckventils 14. Im Rahmen eines prädikativen Verfahrens kann der Verlauf der Durchschnittswerte über den sich regelmäßig wiederholenden Betriebszustand der Startbeschleunigung ermittelt werden, der einen drohenden Defekt des Hochdruckventils 14 anzeigen kann.

Ein weiteres Überwachungsmodul 30 ist zur Überwachung derjenigen Teile des Zapfluftversorgungssystems 10, welche die Hochdruckzapflufteinspeisung als auch den letztendlich in das Druckversorgungsnetz eingespeisten Druck regelt, ausgebildet. Das Überwachungsmodul 30 wird aktiviert, wenn die Betriebszustandswerte angeben, dass die Fahrwerke des Flugzeugs 1 komprimiert sind (also Bodenkontakt haben), die Druckluftverbraucher deaktiviert sind und der Hochdruckkompressor-Ausgangsdruck des Triebwerks 2 in einem vorgegebenen Bereich liegt. Als Sensordaten werden die Daten des Sensors 21 berücksichtigt, die über einem vorgegebenen Schwellwert liegen müssen, wodurch angezeigt wird, dass das Zapfluftversorgungssystem 10 aktiv oder grundsätzlich mit dem Druckluftversorgungsnetz verbunden ist.

Das Überwachungsmodul 30 verfügt weiterhin über einen Zeitverzögerungsparameter von 10 Sekunden als Aktivierungsparameter, sowie einen Zeitdauerparameter von 600 Sekunden als Teil der Deaktivierungsparameter. Zur Erläuterung dieser zeitabhängigen Parameter wird auf die obenstehenden Ausführungen verwiesen.

Die Überwachungsfunktion des Überwachungsmoduls 30 basiert auf den Sensordaten der Drucksensoren 20, 21 und überprüft die Werte auf ihre Varianz und grundsätzliche Gleichlauf hin. Eine zu große Varianz oder eine zu große Abweichung im Verlauf der Werte für den Druck weist auf Probleme wenigstens eines der beiden Steuerungsventile 14, 15 oder deren Ansteuerung hin.

Ein weiteres Überwachungsmodul 30 dient der Überwachung der Sensoren 20-22. Das Überwachungsmodul 30 wird aktiviert, wenn die Betriebszustandswerte eine Flughöhe von über 6.000 m anzeigen, der Hochdruckkompressor-Ausgangsdruck des Triebwerks 2 in einem vorgegebenen Bereich liegt, wenigstens einige Druckluftverbraucher aktiviert sind und die Differenz der von den beiden Sensoren 20 oder 21 Messwerten konstant ist. Deaktiviert wird das Überwachungsmodul 30, wenn einer der vorgenannten Aktivierungsparameter nicht mehr erfüllt ist, oder sich der Aktivierungszustand eines Druckluftverbrauchers oder aber sich die Differenz der Messwerte der beiden Sensoren 20 oder 21 ändert.

Die Aktivierungsparameter zeigen grundsätzlich einen konstanten Systemzustand an, sodass in dieser Phase diejenigen Sensoren 20-22, die nicht für die Aktivierung als konstant herangezogen wurden, auf einen evtl. Drift hin überprüft werden können. Solange sich der grundsätzliche Betriebszustand des Druckluftsystems nicht ändert, was durch die Deaktivierungsparameter sichergestellt ist, sollten sich die Differenzen der Sensordaten der fraglichen Sensoren 20-22 ebenfalls nicht verändern. Wird eine Veränderung der Messwert in den Sensordaten festgestellt, deutet dies auf ein Problem des betroffenen Sensors 20-22 hin.

Es können beliebig weitere Überwachungsmodule 30 mit individuellen Überwachungsfunktionen, Aktivierungs- und Deaktivierungsparametern vorgesehen sein. Die vorstehende beispielhafte Erläuterung einiger möglicher Überwachungsmodule 30 zeigt aber bereits, dass unterschiedliche Überwachungsmodule 30 zur Zustandsüberwachung unterschiedlicher, wenn auch ggf. teilweise überlappender Teile des Zapfluftversorgungssystems 10 ausgebildet sein können. Überwachungsmodule 30, die für die Überwachung desselben Teils des Zapfluftversorgungssystems 10 ausgebildet sind, können über abweichende Aktivierungs- und Deaktivierungsparameter verfügen, sodass sie grundsätzlich in unterschiedlichen Betriebszuständen des Flugzeugs 1 aktiv sind. Auch hier ist eine Überlappung, indem ein Teil des Zapfluftversorgungssystems 10 gleichzeitig von mehreren Überwachungsmodulen 30 überwacht wird, problemlos möglich.

Die Ergebnisse der Überwachungsmodule 30 können unmittelbar in den Betrieb des überwachten Zapfluftversorgungssystems 10 einfließen, indem bspw. eine Warnung an den Piloten ausgegeben und/oder das Zapfluftversorgungssystem 10 - sofern die Zapfluftversorgung anderweitig sichergestellt ist - unmittelbar deaktiviert wird, oder sie werden für die Wartung des Zapfluftversorgungssystems 10 herangezogen, um eine zielgerichtete Wartung durchführen zu können.

## Patentansprüche

1. Verfahren zur Überwachung eines Zapfluftversorgungssystems (10) eines Flugzeuges (1) mit
- wenigstens einem Sensor (20-22) zur Zustandsüberwachung des Zapfluftversorgungssystems (10) anhand der Sensordaten,
- wenigstens einem Betriebszustandsmonitor (5) zur Erfassung des Betriebszustands des Flugzeuges (1) ausgenommen dem Zapfluftversorgungssystem (10) über wenigstens einen Betriebszustandswert, und
- wenigstens zwei unabhängigen Überwachungsmodulen (30) zur Auswertung des Zustands wenigstens eines Teils des Zapfluftversorgungssystems (10), wobei für jedes Überwachungsmodul (30) eine individuelle Überwachungsfunktion, sowie individuelle Aktivierungs- und Deaktivierungsparameter basierend auf Sensordaten des wenigstens einen Sensors und wenigstens einem Betriebszustandswert vorgesehen sind,
mit den Schritten:
- Erfassen des Zustands des Zapfluftversorgungssystems (10) über die Sensordaten und des Betriebszustands des Flugzeuges (1) über den wenigstens einen Betriebszustandswert;
- Aktivieren eines Überwachungsmoduls (30) der wenigstens zwei unabhängigen Überwachungsmodule (30), dessen Aktivierungsparameter durch die Sensordaten und den wenigstens einen Betriebszustandswert erfüllt sind;
- Überwachen des Zustands des Zapfluftversorgungssystems (10) durch das aktivierte Überwachungsmodul (30) anhand dessen Überwachungsfunktion; und
- Deaktivieren des aktivierten Überwachungsmoduls (30), dessen Deaktivierungsparameter durch die Sensordaten und wenigsten einen Betriebszustandswert erfüllt sind.

2. Verfahren nach einem der vorhergehenden Ansprüche,
**dadurch gekennzeichnet, dass**
eines der Überwachungsmodule (30) zur Auswertung des Zustands eines Teils des Zapfluftversorgungssystems (10) ausgebildet ist, dessen Zustand durch ein anderes Überwachungsmodul (30) nicht ausgewertet wird.

3. Verfahren nach Anspruch 2,
**dadurch gekennzeichnet, dass**
wenigstens drei Überwachungsmodule (30) vorgesehen sind, von denen zwei Überwachungsmodule (30) zur Zustandsüberwachung wenigstens teilweise überlappender Teile des Zapfluftversorgungssystems (10) ausgebildet sind, aber abweichende Aktivierungs- und Deaktivierungsparameter aufweisen.

4. Verfahren nach einem der vorhergehenden Ansprüche,
**dadurch gekennzeichnet, dass**
die Deaktivierungsparameter eines Überwachungsmoduls (30) dessen Aktivierungsparametern entsprechen.

5. Verfahren nach einem der vorhergehenden Ansprüche,
**dadurch gekennzeichnet, dass**
die Aktivierungsparameter eines Überwachungsmoduls (30) einen Zeitverzögerungsparameter umfassen, um ein Überwachungsmodul (30) erst nach einer vorgegebenen Zeit nach Erfüllung der Aktivierungsparameter zu aktivieren.

6. Verfahren nach einem der vorhergehenden Ansprüche,
**dadurch gekennzeichnet, dass**
die Deaktivierungsparameter eines Überwachungsmoduls (30) einen Zeitdauerparameter umfassen, um ein Überwachungsmodul (30) nach Ablauf einer vorgegebenen Zeitdauer nach dessen Aktivierung zu deaktivieren.

7. Verfahren nach einem der vorhergehenden Ansprüche,
**dadurch gekennzeichnet, dass**
ein Überwachungsmodul (30) zum Vergleich der erfassten Sensordaten mit historischen, bei vorangegangenen Aktivierungen des Überwachungsmoduls (30) aufgezeichneten Sensordaten ausgebildet ist.

8. Verfahren nach einem der vorhergehenden Ansprüche,
**dadurch gekennzeichnet, dass**
ein Überwachungsmodul (30) zur Ermittlung von Minimal-, Maximal-, Durchschnitts- und/oder Varianzwerten der Sensordaten des wenigsten einen Sensors (20-22) über einen Aktivierungszeitraum zwischen Aktivierung und anschließender Deaktivierung ausgebildet ist.

9. Verfahren nach einem der vorhergehenden Ansprüche,
**dadurch gekennzeichnet, dass**
ein Überwachungsmodul (30) zur Überwachung wenigstens eines Teils der Sensoren (20-22) ausgebildet ist.

10. Verfahren nach einem der vorhergehenden Ansprüche,
**dadurch gekennzeichnet, dass**
das Überwachungsmodul (30) zur Durchführung prädikativer Verfahren und/oder zur Ausgabe von Warnungen ausgebildet ist.

11. Verfahren nach einem der vorhergehenden Ansprüche,
**dadurch gekennzeichnet, dass**
der wenigstens eine Betriebszustandswert Informationen zu den Betriebszuständen der Zapfluftverbraucher, zum Status des Fahrwerks, zum Ausgangsdruck des Hochdruckkompressors eines Triebwerks und/oder zur Umgebungstemperatur umfasst.

12. Anordnung, umfassend wenigstens zwei unabhängige Überwachungsmodule (30) zur Auswertung eines Zustands wenigstens eines Teils eines Zapfluftversorgungssystems (10), wobei für jedes Überwachungsmodul (30) eine individuelle Überwachungsfunktion, sowie individuelle Aktivierungs- und Deaktivierungsparameter basierend auf Sensordaten wenigstens eines Sensors des Zapfluftversorgungssystems und wenigstens einem Betriebszustandswert vorgesehen sind, und wobei jedes der Überwachungsmodule (30) ein Computerprogrammprodukt oder einen Satz von Computerprogrammprodukten umfasst, mit Programmteilen, welche, wenn geladen in einen Computer oder in untereinander vernetzte Computer des jeweiligen Überwachungsmoduls (30), zur Durchführung des Verfahrens nach einem der Ansprüche 1 bis 11 ausgelegt sind.

## Claims

1. Method for monitoring a bleed air supply system (10) of an aircraft (1) having
- at least one sensor (20-22) for condition monitoring of the bleed air supply system (10) on the basis of the sensor data,
- at least one operating condition monitor (5) for detecting the operating condition of the aircraft (1) with the exception of the bleed air supply system (10) via at least one operating condition value, and
- at least two independent monitoring modules (30) for evaluating the condition of at least a part of the bleed air supply system (10), wherein, for each monitoring module (30), an individual monitoring function and individual activation and deactivation parameters based on sensor data of the at least one sensor and at least one operating condition value are provided,
having the following steps:
- detecting the condition of the bleed air supply system (10) via the sensor data and the operating condition of the aircraft (1) via the at least one operating condition value;
- activating a monitoring module (30) of the at least two independent monitoring modules (30), the activation parameters of which are met by the sensor data and the at least one operating condition value;
- monitoring the condition of the bleed air supply system (10) by way of the activated monitoring module (30) by means of its monitoring function; and
- deactivating the activated monitoring module (30), the deactivation parameters of which are met by the sensor data and at least one operating condition value.

2. Method according to one of the preceding claims, **characterized in that**
one of the monitoring modules (30) is designed to evaluate the condition of a part of the bleed air supply system (10), the condition of which is not evaluated by another monitoring module (30).

3. Method according to Claim **2,**
**characterized in that**
at least three monitoring modules (30) are provided, of which two monitoring modules (30) are designed for condition monitoring of at least partially overlapping parts of the bleed air supply system (10), but have deviating activation and deactivation parameters.

4. Method according to one of the preceding claims, **characterized in that**
the deactivation parameters of a monitoring module (30) correspond to its activation parameters.

5. Method according to one of the preceding claims, **characterized in that**
the activation parameters of a monitoring module (30) comprise a time delay parameter in order to activate a monitoring module (30) only after a predefined time after the activation parameters have been met.

6. Method according to one of the preceding claims, **characterized in that**
the deactivation parameters of a monitoring module (30) comprise a duration parameter in order to deactivate a monitoring module (30) after passage of a predefined duration after its activation.

7. Method according to one of the preceding claims, **characterized in that**
a monitoring module (30) is designed to compare the detected sensor data with historic sensor data recorded during preceding activations of the monitoring module (30).

8. Method according to one of the preceding claims, **characterized in that**
a monitoring module (30) is designed to determine minimum, maximum, average, and/or variance values of the sensor data of the at least one sensor (20-22) over an activation time period between activation and subsequent deactivation.

9. Method according to one of the preceding claims, **characterized in that**
a monitoring module (30) is designed to monitor at least one part of the sensors (20-22).

10. Method according to one of the preceding claims, **characterized in that**
the monitoring module (30) is designed to carry out predictive methods and/or to output warnings.

11. Method according to one of the preceding claims, **characterized in that**
the at least one operating condition value comprises items of information on the operating conditions of the bleed air consumers, the status of the landing gear, the output pressure of the high-pressure compressor of an engine, and/or the ambient temperature.

12. Arrangement comprising at least two independent monitoring modules (30) for evaluating a condition of at least one part of a bleed air supply system (10), wherein, for each monitoring module (30), an individual monitoring function and individual activation and deactivation parameters based on sensor data of at least one sensor of the bleed air supply system and at least one operating condition value are provided, and wherein each of the monitoring modules (30) comprises a computer program product or a set of computer program products comprising program parts which, when loaded into a computer or into computers of the respective monitoring module (30) which are networked with one another, are designed to carry out the method according to one of Claims 1 to 11.

## Revendications

1. Procédé de surveillance d'un système d'alimentation en air prélevé (10) d'un aéronef (1), comprenant
- au moins un capteur (20-22) destiné à surveiller l'état du système d'alimentation en air prélevé (10) à l'aide des données de capteur,
- au moins un moniteur d'état de fonctionnement (5) destiné à détecter l'état de fonctionnement de l'aéronef (1), à l'exception du système d'alimentation en air prélevé (10), par le biais d'au moins une valeur d'état de fonctionnement, et
- au moins deux modules de surveillance (30) indépendants destinés à évaluer l'état d'au moins une partie du système d'alimentation en air prélevé (10), une fonction de surveillance individuelle ainsi que des paramètres d'activation et de désactivation individuels basés sur les données de capteur de l'au moins un capteur et au moins une valeur d'état de fonctionnement étant prévus pour chaque module de surveillance (30),
comprenant les étapes suivantes :
- détection de l'état du système d'alimentation en air prélevé (10) par le biais des données de capteur et de l'état de fonctionnement de l'aéronef (1) par le biais de l'au moins une valeur d'état de fonctionnement ;
- activation d'un module de surveillance (30) des au moins deux modules de surveillance (30) indépendants dont les paramètres d'activation sont satisfaits par les données de capteur et l'au moins une valeur d'état de fonctionnement ;
- surveillance de l'état du système d'alimentation en air prélevé (10) par le module de surveillance (30) activé à l'aide de sa fonction de surveillance ; et
- désactivation du module de surveillance (30) activé dont les paramètres de désactivation sont satisfaits par les données de capteur et au moins une valeur d'état de fonctionnement.

2. Procédé selon l'une des revendications précédentes, **caractérisé en ce que**
l'un des modules de surveillance (30) est configuré pour évaluer l'état d'une partie du système d'alimentation en air prélevé (10) dont l'état n'est pas évalué par un autre module de surveillance (30).

3. Procédé selon la revendication 2,
**caractérisé en ce que**
au moins trois modules de surveillance (30) sont présents, dont deux modules de surveillance (30) sont configurés pour la surveillance de l'état de parties au moins partiellement superposées du système d'alimentation en air prélevé (10), mais présentent des paramètres d'activation et de désactivation différents.

4. Procédé selon l'une des revendications précédentes, **caractérisé en ce que**
les paramètres de désactivation d'un module de surveillance (30) correspondent à ses paramètres d'activation.

5. Procédé selon l'une des revendications précédentes, **caractérisé en ce que**
les paramètres d'activation d'un module de surveillance (30) comprennent un paramètre de temporisation afin d'activer un module de surveillance (30) uniquement après un temps prédéfini suivant la satisfaction des paramètres d'activation.

6. Procédé selon l'une des revendications précédentes, **caractérisé en ce que**
les paramètres de désactivation d'un module de surveillance (30) comprennent un paramètre de durée afin de désactiver un module de surveillance (30) après expiration d'une durée prédéfinie après son activation.

7. Procédé selon l'une des revendications précédentes, **caractérisé en ce que**
un module de surveillance (30) est configuré pour comparer les données de capteur détectées avec des données historiques enregistrées lors d'activations précédentes du module de surveillance (30).

8. Procédé selon l'une des revendications précédentes, **caractérisé en ce que**
un module de surveillance (30) est configuré pour identifier des valeurs minimales, maximales, moyennes et/ou de variance des données de capteur de l'au moins un capteur (20-22) pendant une période d'activation comprise entre l'activation et ensuite la désactivation.

9. Procédé selon l'une des revendications précédentes, **caractérisé en ce que**
un module de surveillance (30) est configuré pour surveiller au moins une partie des capteurs (20-22).

10. Procédé selon l'une des revendications précédentes, **caractérisé en ce que**
le module de surveillance (30) est configuré pour exécuter des procédures prédictives et/ou pour délivrer des avertissements.

11. Procédé selon l'une des revendications précédentes, **caractérisé en ce que**
l'au moins une valeur d'état de fonctionnement comprend des informations à propos des états de fonctionnement des consommateurs d'air prélevé, de l'état du train d'atterrissage, de la pression de sortie du compresseur haute pression d'un groupe motopropulseur et/ou de la température ambiante.

12. Arrangement, comprenant au moins deux modules de surveillance (30) indépendants destinés à évaluer l'état d'au moins une partie d'un système d'alimentation en air prélevé (10), une fonction de surveillance individuelle ainsi que des paramètres d'activation et de désactivation individuels basés sur les données de capteur d'au moins un capteur du système d'alimentation en air prélevé et au moins une valeur d'état de fonctionnement étant prévus pour chaque module de surveillance (30), et chacun des modules de surveillance (30) comprenant un produit de programme informatique ou un ensemble de produits de programme informatique avec des parties de programme qui, lorsqu'elles sont chargées dans un ordinateur ou dans des ordinateurs interconnectés en réseau du module de surveillance (30) respectif, sont conçues pour mettre en œuvre le procédé selon l'une des revendications 1 à 11.
